# EUROPÄISCHE PATENTSCHRIFT

(11) **EP 3 077 155 B1**
(45) Veröffentlichungstag und Bekanntmachung des Hinweises auf die Patenterteilung: **18.10.2017**
(21) Anmeldenummer: 14815229.1
(22) Anmeldetag: 03.12.2014
(51) Int. Cl.: B24B 19/12, B24B 41/06, B23Q 3/12, F16H 53/02, F01L 1/047

(54) **AUFNAHMEANORDNUNG FÜR DIE SCHLEIFBEARBEITUNG EINER NOCKENWELLE UND VERFAHREN ZUR SCHLEIFBEARBEITUNG DER NOCKENWELLE**
ACCOMMODATING ASSEMBLY FOR THE GRINDING OF A CAMSHAFT AND METHOD FOR GRINDING THE CAMSHAFT
DISPOSITIF DE RÉCEPTION POUR L'USINAGE PAR MEULAGE D'UN ARBRE À CAMES ET PROCÉDÉ D'USINAGE PAR MEULAGE DE L'ARBRE À CAMES

(30) Priorität: 04.12.2013 DE 102013113444
(43) Veröffentlichungstag der Anmeldung: 12.10.2016
(73) Patentinhaber: Thyssenkrupp Presta Teccenter Ag, 9492 Eschen (LI)
(72) Erfinder: VOGEL, Immo, 88131 Lindau/Bodensee (DE); SALZGEBER, Franz, FL-9493 Mauren (LI)
(74) Vertreter: thyssenkrupp Intellectual Property GmbH
(86) Internationale Anmeldenummer: PCT/EP2014/003220
(87) Internationale Veröffentlichungsnummer: WO 2015/082066

(56) Entgegenhaltungen:
- EP-A2- 2 354 477
- DE-B3-102005 034 777

## Beschreibung

Die vorliegende Erfindung betrifft eine Aufnahmeanordnung zur Aufnahme einer Nockenwelle, wobei die Nockenwelle einen Wellenkörper mit Funktionselementen umfasst, der sich in einer Rotationsachse erstreckt und wobei ein Zahnrad auf dem Wellenkörper aufgebracht ist, wobei ein Aufnahmekörper vorgesehen ist, durch den die Nockenwelle zur Ausführung einer Schleifbearbeitung wenigstens teilweise aufnehmbar ist. Die Erfindung betrifft weiterhin ein Verfahren zur Schleifbearbeitung einer Nockenwelle mit einer solchen Aufnahmeanordnung und die Erfindung betrifft eine Nockenwelle, die in einer Aufnahmeanordnung gemäß der vorliegenden Erfindung aufnehmbar ist.

### STAND DER TECHNIK

In der EP 2 354 477 A2 ist eine Nockenwelle mit einem Wälzlager gezeigt, welches eine Wälzlagereinlage und einen Wälzlageraußenring, welcher an seinem Außenumfang ein Fixierungselement aufweist, umfasst. Dieses Fixierungselement ist dazu geeignet das Wälzlager in einer Lageraufnahme eines Kraftfahrzeug-Zylinderkopfes radial und axial zu fixieren. Hierdurch soll eine verbesserte Wälzlageranordnung sowie eine Wälzlagermontagevorrichtung bereitgestellt werden, wobei die Wälzlagermontagevorrichtung es ermöglicht die Wälzlagerkomponente beim Beschleifen der Nocken schmutzfrei zu halten. Eine Ausgestaltung einer Aufnahmeanordnung der Nockenwelle während der Schleifbearbeitung Letzterer ist jedoch nicht offenbart.

Die DE 10 2005 034 777 B3 zeigt eine Nockenwelle, die in einer Aufnahmeanordnung aufgenommen werden kann, sodass die Nockenwelle in einer Aufnahmeanordnung einer Schleifbearbeitung unterzogen werden kann. Dabei wird ein Wellenkörper vorgeschlagen, auf dem Funktionselemente der Nockenwelle und ein Zahnrad aufgebracht sind, und es wird angegeben, dass die Funktionselemente, insbesondere ein Passlagersitz, in einer Schleifbearbeitung hergestellt werden können. Nachteilhafterweise ergibt sich jedoch durch das Aufschrumpfen des Zahnrades auf den Wellenkörper ein Lagefehler der Verzahnung des Zahnrades zum bearbeiteten Passlagersitz. Eine zueinander genaue Schleifbearbeitung kann bei einmaliger Aufspannung der Nockenwelle lediglich zwischen dem Passlagersitz und den Funktionselementen, beispielsweise einem Nockenelement, erfolgen. Da jedoch die Herstellung der Verzahnung des Zahnrades vor dem Aufschrumpfen des Zahnrades auf den Wellenkörper erfolgt, können enge Lagetoleranzen und Rundlaufgenauigkeiten zwischen der Verzahnung des Zahnrades auf dem Wellenkörper und dem Passlagersitz und sonstigen Funktionselementen nicht eingehalten werden. Dadurch ergeben sich häufig geringere Standzeiten der Zahnräder von Nockenwellen, oder das einfache Aufpressen von Zahnrädern auf den Wellenkörper zur Herstellung der Nockenwelle ist häufig nicht möglich, da durch die Pressung zu große Lageabweichungen zwischen der Verzahnung des Zahnrades und den durch eine Schleifbearbeitung hergestellten Funktionselementen wie Lagerelementen und Nockenelementen auftreten.

### OFFENBARUNG DER ERFINDUNG

Aufgabe der Erfindung ist die Verbesserung einer Aufnahmeanordnung zur Überwindung der vorstehend beschriebenen Nachteile. Insbesondere soll die Aufnahmeanordnung einfach ausgeführt werden und eine hohe Lagegenauigkeit zwischen dem auf dem Wellenkörper aufgebrachten Zahnrad und den Funktionselementen ermöglichen. Zudem soll ein Verfahren zur Schleifbearbeitung einer Nockenwelle in einer solchen Aufnahmeanordnung angegeben werden, das eine genaue Lagetoleranz der Verzahnung des Zahnrades zu den Funktionselementen schafft. Folglich ergibt sich auch die Aufgabe der Erfindung, eine Nockenwelle anzugeben, die in einer solchen Aufnahmeanordnung und mit einem solchen Verfahren aufgenommen und bearbeitet werden kann.

Diese Aufgabe wird ausgehend von einer Aufnahmeanordnung gemäß dem Oberbegriff des Anspruchs 1, ausgehend von einem Verfahren gemäß den bekannten Merkmalen des Anspruchs 8 und ausgehend von einer Nockenwelle gemäß dem Oberbegriff des Anspruchs 10 mit den jeweils kennzeichnenden Merkmalen gelöst. Vorteilhafte Weiterbildungen der Erfindung sind in den jeweils abhängigen Ansprüchen angegeben.

Die Erfindung schließt die technische Lehre ein, dass das Zahnrad ein Aufnahmemittel aufweist, an das der Aufnahmekörper ansetzbar ist und über das die Aufnahme der Nockenwelle durch den Aufnahmekörper ermöglicht ist.

Mit der erfindungsgemäßen Aufnahmeanordnung zur Aufnahme einer Nockenwelle wird die Möglichkeit geschaffen, eine Schleifbearbeitung der Nockenwelle auszuführen, durch die sich minimale Rundlauffehler und Lagetoleranzen zwischen der Verzahnung des Zahnrades und den Funktionselementen ergeben. Das Aufnahmemittel am Zahnrad kann ein geometrisches Schleifzentrum bilden, das bereits bei der Herstellung des Zahnrades als Schleifzentrum für die Herstellung der Verzahnung gedient haben kann oder die zumindest mit der Herstellung der Verzahnung gemeinsam hergestellt ist, insbesondere in einer Bearbeitungsaufspannung. Bei einer Variante, bei der das Zahnrad als Sinterbauteil hergestellt wird, kann das Aufnahmemittel auf gleiche Weise als Referenzgeometrie dienen, die ebenfalls eine entsprechend hohe Genauigkeit zur Verzahnung aufweist und im Sinterprozess eng toleriert zur Geometrie des Aufnahmemittels ausgebildet ist.

Das Zahnrad kann dabei auch oder alternativ andere oder weitere Funktionen erfüllen und beispielsweise als Sensorrad dienen oder als Ketten- oder Riemenrad ausgebildet sein. Im Rahmen der vorliegenden Erfindung muss das Zahnrad nicht einteilig sein und das Aufnahmemittel kann beispielsweise auch an einer Hülse ausgebildet sein, die mit dem Zahnrad verpresst ist.

Wird die Nockenwelle über das Aufnahmemittel am Zahnrad wenigstens teilweise aufgenommen, und wird wenigstens eines der Funktionselemente in dieser Aufnahme schleifbearbeitet, so fallen das Schleifzentrum zur Herstellung der Verzahnung und das Schleifzentrum zur Schleifbearbeitung der Funktionselemente zusammen, sodass sich minimale Rundlauffehler der Verzahnung des Zahnrades zu den Funktionselementen ergeben.

Das Aufnahmemittel kann durch einen Bund mit einer konusförmigen Ausformung gebildet sein, wobei der Bund nabenseitig und konzentrisch um die Rotationsachse am Zahnrad angeformt ist. Der Aufnahmekörper kann dabei eine komplementär zur konusförmigen Ausformung des Bundes ausgebildete Aufnahmeanformung aufweisen, die an die konusförmige Ausformung des Bundes ansetzbar ist und somit umlaufend einen Flächenkontakt bildet. Der Aufnahmekörper kann dabei das Aufnahmemittel umschließen oder in das Aufnahmemittel eingesetzt werden, wobei beide Möglichkeiten den gewünschten Erfolg bringen, die Nockenwelle mit dem Aufnahmekörper wenigstens teilweise aufzunehmen. Auch kann das Aufnahmemittel oder der Aufnahmekörper eine umlaufende Kante, beispielsweise eine Fase, aufweisen, die an der Konuskontur innen- oder außenseitig anliegt und somit einen Linienkontakt bildet.

Die nur teilweise Aufnahme der Nockenwelle ergibt sich dadurch, dass bei einer Schleifbearbeitung einer Nockenwelle diese grundsätzlich über zumindest zwei Zentrierspitzen in ihrer Rotationsachse drehbar aufgenommen werden muss, analog dem Prinzip eines Spannfutters und einer Pinole einer Drehmaschine. Der Aufnahmekörper ersetzt dabei eine der Zentrierspitzen, und die Nockenwelle wird über den Aufnahmekörper am Aufnahmemittel des Zahnrades aufgenommen, wobei eine weitere Aufnahme am anderen Ende der Nockenwelle vorgesehen sein kann. Dabei besteht einerseits die Möglichkeit, die konusförmige Ausformung innenseitig im Bund auszubilden oder die konusförmige Ausformung kann außenseitig am Bund ausgeformt sein. Entsprechend komplementär kann der Aufnahmekörper ausgebildet sein, und der Aufnahmekörper kann einen Innenkonus oder einen Außenkonus umfassen. Grundsätzlich besteht dabei auch die alternative Ausgestaltung des Aufnahmemittels als Innenzylinderfläche oder als Außenzylinderfläche, und der Aufnahmekörper umfasst eine komplementär ausgebildete Außenzylinderfläche oder eine Innenzylinderfläche, wobei eine Aufnahmepassung entsprechend eng toleriert sein muss. Auf gleiche Weise kann die Ausformung auch durch eine ballige Kontur gebildet sein.

Gemäß einer weiterbildenden Ausführungsform kann der Wellenkörper in seiner länglichen Erstreckung in Richtung der Rotationsachse axial über der Position des Zahnrades auf dem Wellenkörper hervorstehen, sodass das Zahnrad beabstandet zum axialen Ende des Wellenkörpers auf diesem aufgenommen ist. Folglich kann der Aufnahmekörper wenigstens abschnittsweise mit einem endseitig offenen Hohlraum ausgebildet sein, in dem das Ende des Wellenkörpers aufnehmbar ist. Insbesondere bei hervorstehenden Wellenenden konnten Nockenwellen bislang nur durch eine Zentrierspitze zur Schleifbearbeitung über den Wellenkörper aufgenommen werden. Dadurch ergibt sich jedoch ein Rundlauffehler der Verzahnung des Zahnrades auf dem Wellenkörper, da die Verbindung des Zahnrades zum Wellenkörper häufig als Preßsitz ausgestaltet ist, wodurch sich erhöhte Lagetoleranzen ergeben. Durch die spezielle Ausgestaltung des Aufnahmekörpers mit einem Hohlraum gelingt jedoch trotz eines hervorstehenden Wellenendes die Aufnahme der Nockenwelle über das Aufnahmemittel am Zahnrad, sodass auch bei Nockenwellen mit hervorstehenden Wellenenden die erfindungsgemäße Aufnahmeanordnung umgesetzt werden kann.

Mit weiterem Vorteil kann die Nockenwelle als gebaute Nockenwelle ausgebildet sein, wobei der Wellenkörper, das Zahnrad und vorzugsweise auch die Funktionselemente als Einzelteile ausgebildet und auf den Wellenkörper gefügt sind. Alternativ kann die Nockenwelle jedoch auch als massive Nockenwelle hergestellt sein, auf die das Zahnrad nachträglich aufgebracht ist, und eine Schleifbearbeitung der Funktionselemente der Nockenwelle, die mit dem Wellenkörper einteilig und materialeinheitlich ausgeführt sind, kann auf gleiche Weise über die erfindungsgemäße Aufnahmeanordnung erfolgen.

Die Erfindung betrifft weiterhin ein Verfahren zur Schleifbearbeitung einer Nockenwelle in einer Aufnahmeanordnung zur Aufnahme der Nockenwelle, wobei die Nockenwelle einen Wellenkörper mit Funktionselementen umfasst, der sich in einer Rotationsachse erstreckt und wobei ein Zahnrad auf dem Wellenkörper aufgebracht ist. Das Verfahren umfasst dabei wenigstens die Schritte des Bereitstellens eines Aufnahmekörpers zur wenigstens teilweisen Aufnahme der Nockenwelle, das Bereitstellen des Zahnrades mit einem Aufnahmemittel, das Aufnehmen der Nockenwelle durch ein Ansetzen des Aufnahmekörpers an das Aufnahmemittel und das Schleifen des wenigstens einen Funktionselementes. Das Ansetzen des Aufnahmekörpers an das Aufnahmemittel kann dabei insbesondere durch ein zentrierendes Einsetzen des Aufnahmekörpers in das Aufnahmemittel erfolgen.

Das Zahnrad kann mit einer Verzahnung bereitgestellt werden, bei dem das Aufnahmemittel und die Verzahnung mit einem gemeinsamen geometrischen Bearbeitungszentrum hergestellt sind, und wobei das Zahnrad erst anschließend auf den Wellenkörper aufgepresst oder aufgeschrumpft wird.

Die Erfindung richtet sich weiterhin auf eine Nockenwelle mit einem Wellenkörper umfassend mehrere Funktionselemente, wobei sich der Wellenkörper in einer Rotationsachse erstreckt und wobei ein Zahnrad auf dem Wellenkörper aufgebracht ist, und es ist vorgesehen, dass das Zahnrad ein Aufnahmemittel aufweist, an das ein Aufnahmekörper ansetzbar ist und über das die Aufnahme der Nockenwelle durch den Aufnahmekörper ermöglicht ist, um eine Aufnahmeanordnung zur Schleifbearbeitung wenigstens eines der Funktionselemente zu schaffen. Das Ansetzen des Aufnahmekörpers an das Aufnahmemittel kann dabei insbesondere durch ein Einsetzen oder ein Umgreifen des Aufnahmekörpers in oder um das Aufnahmemittel erfolgen.

Erfindungsgemäß ist das Aufnahmemittel durch einen nabenseitig und konzentrisch um die Rotationsachse am Zahnrad angeformten Bund mit einer konusförmigen Ausformung oder konusförmigen Anformung gebildet. Sofern der der Bund eine konusförmige Anformung bildet, kannder Aufnahmekörper eine entsprechend komplementär ausgebildete konusförmige Ausformung besitzen, sodass alternativ der Aufnahmekörper die konusförmige Anformung des Bundes umgreifen kann, wodurch ebenfalls die Nockenwelle im Schleifzentrum der Verzahnung des Zahnrades aufgenommen werden kann.

Gemäß einer weiteren vorteilhaften Ausgestaltung der Nockenwelle kann der Wellenkörper in seiner länglichen Erstreckung in Richtung der Rotationsachse axial über der Position des Zahnrades auf dem Wellenkörper hervorstehen, sodass das Zahnrad beabstandet zum axialen Wellenende des Wellenkörpers auf diesem aufgenommen ist. Die Nockenwelle kann als gebaute Nockenwelle ausgebildet sein, wobei der Wellenkörper, das Zahnrad und vorzugsweise auch die Funktionselemente als Einzelteile ausgebildet und miteinander gefügt sind.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel einer Aufnahmeanordnung zur Aufnahme einer Nockenwelle in einer Querschnittsansicht und
- Figur 2: eine perspektivische Ansicht eines Zahnrades mit einer Verzahnung und einem Wellendurchgang zur Aufnahme auf dem Wellenkörper einer Nockenwelle.

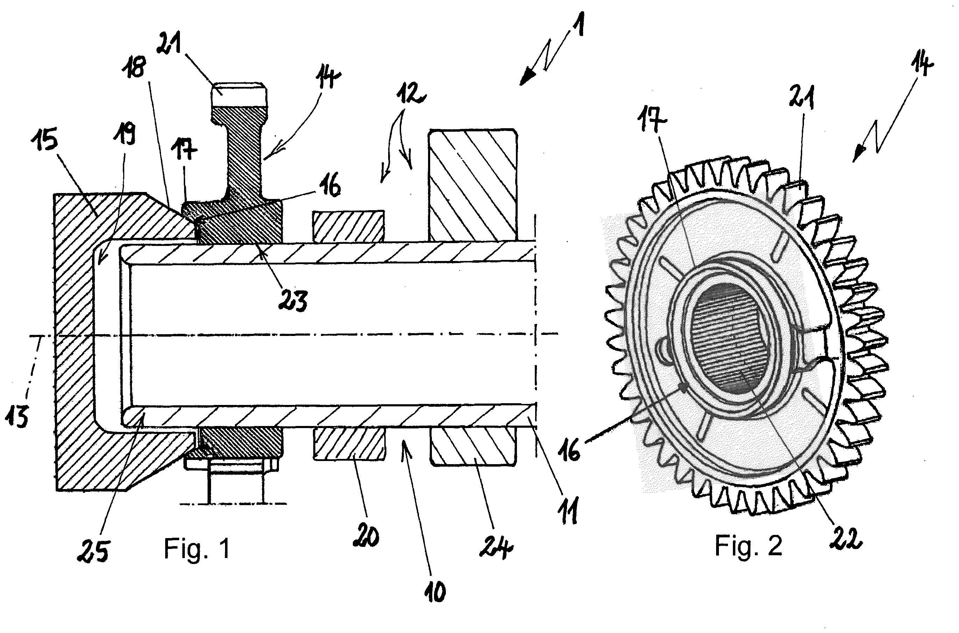

Figur 1 zeigt ein Ausführungsbeispiel einer Aufnahmeanordnung 1 mit einem Ausführungsbeispiel einer Nockenwelle 10, und mit dem Ausführungsbeispiel der gezeigten Aufnahmeanordnung 1 kann das erfindungsgemäße Verfahren zur Schleifbearbeitung der Nockenwelle 10 ausgeführt werden.

Die Nockenwelle 10 ist lediglich teilweise gezeigt und umfasst einen Wellenkörper 11, welcher als Hohlwelle ausgeführt ist und auf dem Wellenkörper 11 sind beispielhaft zwei Funktionselemente 12 angeordnet. Ein erstes Funktionselement 12 bildet ein Lagerelement 20 zur Lagerung der Nockenwelle 10 im Zylinderkopf einer Brennkraftmaschine, ein weiteres Funktionselement 12 ist beispielhaft als Nockenelement 24 ausgebildet. Das Lagerelement 20 ist beispielhaft als einzelnes, auf den Wellenkörper 11 aufgeschobenes ringförmiges Element gezeigt, und das Lagerelement 20 kann auch durch einen Abschnitt des Wellenkörpers 11 gebildet werden. Beispielsweise kann der Abschnitt des Wellenkörpers 11, wie auch die Außenumfangsfläche des Lagerelementes 20 oder des Nockenelementes 24, einer Schleifbearbeitung unterzogen werden, um die Nockenwelle 10 in zugeordneten Lagerschalen im Zylinderkopf der Brennkraftmaschine um die Rotationsachse drehbeweglich zu lagern.

Als weiteres Element ist auf den Wellenkörper 11 ein Zahnrad 14 aufgebracht und das Zahnrad 14 ist über einen Preßsitz 23 auf dem Wellenkörper 11 befestigt. Das Zahnrad 14 kann beispielsweise zum Antrieb der Nockenwelle 10 oder zur drehbeweglichen Kopplung einer weiteren Nockenwelle dienen, und das Zahnrad 14 weist eine Verzahnung 21 auf, die das Zahnrad 14 außenumfänglich abschließt. Das Zahnrad 14 weist dabei einen Sitz auf dem Wellenkörper 11 auf, der axial in Richtung der Rotationsachse 13 beabstandet zum Wellenende 25 ausgebildet ist. Folglich ragt das Wellenende 25 in Richtung zur Rotationsachse 13 axial aus der Setzposition des Zahnrades 14 auf dem Wellenkörper 11 hervor.

Die Aufnahmeanordnung 1 ist durch einen Aufnahmekörper 15 zur Aufnahme der Nockenwelle 10 gebildet, und der Aufnahmekörper 15 kann beispielsweise Bestandteil eines Schleif-Bearbeitungszentrums sein und ist lediglich schematisiert gezeigt. Der Aufnahmekörper 15 weist eine Aufnahmeanformung 18 auf, die mit einem Aufnahmemittel 16 zusammenwirkt, sodass die Nockenwelle 10 wenigstens teilweise über den Aufnahmekörper 15 um die Rotationsachse 13 drehbeweglich aufgenommen ist. Die teilweise Aufnahme der Nockenwelle 10 ergibt sich daraus, dass eine weitere Aufnahme der Nockenwelle 10 entlang der Rotationsachse 13 beispielsweise am gegenüberliegenden Ende zum Wellenende 25 des Wellenkörpers 11 in nicht gezeigter Weise vorgesehen ist, und die weitere Aufnahme kann beispielsweise als Drehspitze insbesondere in Form einer Pinole ausgebildet sein.

Damit das aus der Position des Zahnrades 14 hervorstehende Wellenende 25 die Aufnahme der Nockenwelle 10 über den Aufnahmekörper 15 nicht behindert, weist der Aufnahmekörper 15 einen Hohlraum 19 auf, der geometrisch so ausgestaltet ist, dass das Wellenende 25 insbesondere ohne Körperkontakt in den Aufnahmekörper 15 hineinragt.

Das Aufnahmemittel 16 am Zahnrad 14 ist durch einen angeformten Bund 17 mit einer konusförmigen innenseitigen Ausformung gebildet und der Bund 17 befindet sich nabenseitig und konzentrisch um die Rotationsachse 13 am Zahnrad 14. Der Bund 17 ist dabei einteilig mit dem Körper des Zahnrades 14 ausgebildet, wobei die konusförmige Ausformung zur Bildung des Aufnahmemittels 16 in einer gemeinsamen Bearbeitung mit der spanenden Herstellung der Verzahnung 21 hergestellt ist. Folglich bildet das Aufnahmemittel 16 im Bund 17 in Form der konusförmigen Ausformung das geometrische Schleif-Bearbeitungszentrum des Zahnrades 14, sodass die Verzahnung 21 mit dem Aufnahmemittel 16 einen minimalen Rundlauffehler aufweist.

Komplementär zur konusförmigen Ausformung im Bund 17 ist die Aufnahmeanformung 18 am Aufnahmekörper 15 ausgebildet, insbesondere kann der Konus mit einer Außenfläche der Aufnahmeanformung 18 einen gleichen Winkel aufweisen, wie der Konus im Aufnahmemittel 16 am Zahnrad 14. Damit kann das Zahnrad 14 und insbesondere die Verzahnung 21 mit einem nur minimalen Rundlauffehler am Aufnahmekörper 15 aufgenommen werden.

Wird in der gezeigten Aufnahmeanordnung 1 wenigstens eines der Funktionselemente 12, insbesondere das Lagerelement 20 oder die Außenumfangsfläche des Wellenkörpers 11, einer Schleifbearbeitung unterzogen, so wird sichergestellt, dass sich zwischen der Verzahnung 21 und der schleifbearbeiteten Oberfläche des Funktionselementes 12 oder der Außenumfangsfläche des Wellenkörpers 11 ein nur minimaler Rundlauffehler ergibt. Im späteren Einsatz der Nockenwelle 10 weist daraus folgend die Verzahnung 21 minimale Toleranzabweichungen zur wenigstens einen spanend bearbeiteten Oberfläche eines der Funktionselemente 12 oder der Außenumfangsfläche des Wellenkörpers 11 auf.

Figur 2 zeigt in einer perspektivischen Ansicht das Zahnrad 14 mit der außenumfänglichen Verzahnung 21 und dem seitlich angebrachten Aufnahmemittel 16 innerhalb eines Bundes 17, wobei der Bund 17 einteilig mit dem Körper des Zahnrades 14 ausgebildet und an diesem angeformt ist. Innenseitig weist das Zahnrad 14 einen Wellendurchgang 22 auf, und beispielhaft ist eine Rillenoberfläche gezeigt, mit der das Zahnrad 14 auf den Wellenkörper 11 aufgepresst werden kann, und die Rillenoberfläche kann beispielsweise eine Verzahnung längs der Rotationsachse 13 bzw. längs der Mittelachse des Zahnrades 14 bilden.

Bei einer beispielsweise spanenden, insbesondere schleiftechnischen Herstellung des Zahnrades 14 erfolgt die Bearbeitung des Aufnahmemittels 16 in einer gemeinsamen Aufspannung mit der Herstellung der Verzahnung 21, und folglich bildet das Aufnahmemittel 16 ein Schleifzentrum für die Verzahnung 21, und das gebildete Schleifzentrum in Form des Aufnahmemittels 16 dient zur späteren Schleifbearbeitung der Nockenwelle 10 mit dem auf dem Wellenkörper 11 aufgepressten Zahnrad 14 das Referenz-Schleifzentrum zur schleifenden Bearbeitung wenigstens eines der Funktionselemente 12. Ist das Zahnrad 14 als Sinterbauteil hergestellt, so kann das Aufnahmemittel 16 bereits durch den Sinterprozess sehr eng zur Verzahnung 21 des Zahnrades 14 toleriert sein.

Die Erfindung beschränkt sich in ihrer Ausbildung nicht auf das vorstehende angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Aufnahmeanordnung
- 10: Nockenwelle
- 11: Wellenkörper
- 12: Funktionselement
- 13: Rotationsachse
- 14: Zahnrad
- 15: Aufnahmekörper
- 16: Aufnahmemittel
- 17: Bund
- 18: Aufnahmeanformung
- 19: Hohlraum
- 20: Lagerelement
- 21: Verzahnung
- 22: Wellendurchgang
- 23: Preßsitz
- 24: Nockenelement
- 25: Wellenende

## Patentansprüche

1. Aufnahmeanordnung (1), bestehend aus einem Aufnahmekörper (15) und einer Nockenwelle (10), zur Aufnahme der Nockenwelle (10), wobei die Nockenwelle (10) einen Wellenkörper (11) mit Funktionselementen (12) umfasst, der sich in einer Rotationsachse (13) erstreckt und wobei ein Zahnrad (14) auf dem Wellenkörper (11) aufgebracht ist, wobei ein Aufnahmekörper (15) vorgesehen ist, durch den die Nockenwelle (10) zur Ausführung einer Schleifbearbeitung wenigstens teilweise aufnehmbar ist,
**dadurch gekennzeichnet, dass** das Zahnrad (14) ein Aufnahmemittel (16) aufweist, an das der Aufnahmekörper (15) ansetzbar ist und über das die Aufnahme der Nockenwelle (10) durch den Aufnahmekörper (15) ermöglicht ist.

2. Aufnahmeanordnung (1) nach Anspruch 1, **dadurch gekennzeichnet, dass** das Aufnahmemittel (16) durch einen Bund (17) mit einer konusförmigen Ausformung gebildet ist, wobei der Bund (17) nabenseitig und konzentrisch um die Rotationsachse (13) am Zahnrad (14) angeformt ist.

3. Aufnahmeanordnung (1) nach Anspruch 2, **dadurch gekennzeichnet, dass** der Aufnahmekörper (15) eine komplementär zur konusförmigen Ausformung des Bundes (17) ausgebildete Aufnahmeanformung (18) aufweist, die an die konusförmige Ausformung des Bundes (17) ansetzbar ist.

4. Aufnahmeanordnung (1) nach einem der Ansprüche 1 bis 3, **dadurch gekennzeichnet, dass** der Wellenkörper (11) in seiner länglichen Erstreckung in Richtung der Rotationsachse (13) axial über der Position des Zahnrades (14) auf dem Wellenkörper (11) hervorsteht, sodass das Zahnrad (14) beabstandet zum axialen Ende des Wellenkörpers (11) auf diesem aufgenommen ist.

5. Aufnahmeanordnung (1) nach einem der vorgenannten Ansprüche, **dadurch gekennzeichnet, dass** der Aufnahmekörper (15) wenigstens abschnittsweise mit einem endseitig offenen Hohlraum (19) ausgebildet ist, in dem das Wellenende (25) des Wellenkörpers (11) aufnehmbar ist.

6. Aufnahmeanordnung (1) nach einem der vorgenannten Ansprüche, **dadurch gekennzeichnet, dass** wenigstens ein Funktionselement (12) als Lagerelement (20) ausgebildet ist.

7. Aufnahmeanordnung (1) nach einem der vorgenannten Ansprüche, **dadurch gekennzeichnet, dass** die Nockenwelle (10) als gebaute Nockenwelle (10) ausgebildet ist, wobei der Wellenkörper (11), das Zahnrad (14) und vorzugsweise auch die Funktionselemente (12) als Einzelteile ausgebildet und auf dem Wellenkörper (11) gefügt sind.

8. Verfahren zur Schleifbearbeitung einer Nockenwelle (10) in einer Aufnahmeanordnung (1) zur Aufnahme der Nockenwelle (10), wobei die Nockenwelle (10) einen Wellenkörper (11) mit Funktionselementen (12) umfasst, der sich in einer Rotationsachse (13) erstreckt und wobei ein Zahnrad (14) auf dem Wellenkörper (11) aufgebracht ist, wobei das Verfahren wenigstens die folgenden Schritte umfasst:
- Bereitstellen eines Aufnahmekörpers (15) zur wenigstens teilweisen Aufnahme der Nockenwelle (10),
- Bereitstellen des Zahnrades (14) mit einem Aufnahmemittel (16),
- Aufnehmen der Nockenwelle (10) durch ein Ansetzen des Aufnahmekörpers (15) an das Aufnahmemittel (16) und
- Schleifen des wenigstens einen Funktionselementes (12).

9. Verfahren nach Anspruch 8, **dadurch gekennzeichnet, dass** das Zahnrad (14) mit einer Verzahnung (21) bereitgestellt wird, wobei das Aufnahmemittel (16) und die Verzahnung (21) mit einem gemeinsamen geometrischen Bearbeitungszentrum hergestellt sind, und/oder dass das Zahnrad (14) anschließend auf den Wellenkörper (11) aufgepresst oder aufgeschrumpft wird.

10. Nockenwelle (10) mit einem Wellenkörper (11) umfassend mehrere Funktionselemente (12), wobei sich der Wellenkörper (11) in einer Rotationsachse (13) erstreckt und wobei ein Zahnrad (14) auf dem Wellenkörper (11) aufgebracht ist,
**dadurch gekennzeichnet, dass** das Zahnrad (14) ein Aufnahmemittel (16) aufweist, an das ein Aufnahmekörper (15) ansetzbar ist und über das die Aufnahme der Nockenwelle (10) durch den Aufnahmekörper (15) ermöglicht ist, um eine Aufnahmeanordnung (1) zur Schleifbearbeitung wenigstens eines der Funktionselemente (12) zu schaffen, wobei das Aufnahmemittel (16) durch einen nabenseitig und konzentrisch um die Rotationsachse (13) am Zahnrad (14) angeformten Bund (17) mit einer konusförmigen Ausformung oder konusförmigen Anformung gebildet ist.

11. Nockenwelle (10) nach Anspruch 10, **dadurch gekennzeichnet, dass** der Wellenkörper (11) in seiner länglichen Erstreckung in Richtung der Rotationsachse (13) axial über der Position des Zahnrades (14) auf dem Wellenkörper (11) hervorsteht, sodass das Zahnrad (14) beabstandet zum axialen Wellenende (25) des Wellenkörpers (11) auf diesem aufgenommen ist.

12. Nockenwelle (10) nach einem der Ansprüche 10 oder11, **dadurch gekennzeichnet, dass** die Nockenwelle (10) als gebaute Nockenwelle (10) ausgebildet ist, wobei der Wellenkörper (11), das Zahnrad (14) und vorzugsweise auch die Funktionselemente (12) als Einzelteile ausgebildet und miteinander gefügt sind.

## Claims

1. Receiving arrangement (1), composed of a receiving body (15) and a camshaft (10), for receiving the camshaft (10), wherein the camshaft (10) comprises a shaft body (11) with functional elements (12), which shaft body extends along an axis of rotation (13), and wherein a gearwheel (14) is mounted on the shaft body (11), wherein a receiving body (15) is provided, by means of which the camshaft (10) can be at least partially received for the purposes of performing a grinding machining process,
**characterized in that** the gearwheel (14) has a receiving means (16) onto which the receiving body (15) can be engaged and by way of which it is made possible for the camshaft (10) to be received by the receiving body (15).

2. Receiving arrangement (1) according to Claim 1,
**characterized in that** the receiving means (16) is formed by a collar (17) with a conical recess, wherein the collar (17) is integrally formed on the gearwheel (14) at the hub side and concentrically about the axis of rotation (13).

3. Receiving arrangement (1) according to Claim 2,
**characterized in that** the receiving body (15) has a receiving formation (18) which is of complementary form to the conical recess of the collar (17) and which can be engaged onto the conical recess of the collar (17).

4. Receiving arrangement (1) according to one of Claims 1 to 3, **characterized in that** the shaft body (11), in terms of its longitudinal extent in the direction of the axis of rotation (13), protrudes axially beyond the position of the gearwheel (14) on the shaft body (11), such that the gearwheel (14) is received on the shaft body (11) so as to be spaced apart from the axial end of said shaft body.

5. Receiving arrangement (1) according to one of the preceding claims, **characterized in that** the receiving body (15) is formed, at least in sections, with a cavity (19) which is open at the end side and in which the shaft end (25) of the shaft body (11) can be received.

6. Receiving arrangement (1) according to one of the preceding claims, **characterized in that** at least one functional element (12) is in the form of a bearing element (20).

7. Receiving arrangement (1) according to one of the preceding claims, **characterized in that** the camshaft (10) is in the form of an assembled camshaft (10), wherein the shaft body (11), the gearwheel (14) and preferably also the functional elements (12) are formed as individual parts and are joined onto the shaft body (11).

8. Method for the grinding machining of a camshaft (10) in a receiving arrangement (1) for receiving the camshaft (10), wherein the camshaft (10) comprises a shaft body (11) with functional elements (12), which shaft body extends along an axis of rotation (13), and wherein a gearwheel (14) is mounted on the shaft body (11), wherein the method comprises at least the following steps:
- providing a receiving body (15) for at least partially receiving the camshaft (10),
- providing the gearwheel (14), which has a receiving means (16),
- receiving the camshaft (10) by engaging the receiving body (15) onto the receiving means (16), and
- grinding the at least one functional element (12).

9. Method according to Claim 8, **characterized in that** the gearwheel (14) is provided with a toothing (21), wherein the receiving means (16) and the toothing (21) are produced with a common geometrical machining center, and/or **in that** the gearwheel (14) is subsequently pressed or shrink-fitted onto the shaft body (11).

10. Camshaft (10) having a shaft body (11) comprising multiple functional elements (12), wherein the shaft body (11) extends along an axis of rotation (13), and wherein a gearwheel (14) is mounted on the shaft body (11),
**characterized in that** the gearwheel (14) has a receiving means (16) into which a receiving body (15) can be engaged and by way of which it is made possible for the camshaft (10) to be received by the receiving body (15), so as to provide a receiving arrangement (1) for the grinding machining of at least one of the functional elements (12), wherein the receiving means (16) is formed by a collar (17) which is integrally formed on the gearwheel (14) at the hub side and concentrically around the axis of rotation (13) and which has a conical recess or a conical formation.

11. Camshaft (10) according to Claim 10, **characterized in that** the shaft body (11), in terms of its longitudinal extent in the direction of the axis of rotation (13), protrudes axially beyond the position of the gearwheel (14) on the shaft body (11), such that the gearwheel (14) is received on the shaft body (11) so as to be spaced apart from the axial shaft end (25) of said shaft body.

12. Camshaft (10) according to either of Claims 10 and 11, **characterized in that** the camshaft (10) is in the form of an assembled camshaft (10), wherein the shaft body (11), the gearwheel (14) and preferably also the functional elements (12) are formed as individual parts and are joined together.

## Revendications

1. Dispositif de réception (1), se composant d'un corps de réception (15) et d'un arbre à cames (10), pour la réception de l'arbre à cames (10), dans lequel l'arbre à cames (10) comprend un corps d'arbre (11) avec des éléments fonctionnels (12), qui s'étend selon un axe de rotation (13) et dans lequel une roue dentée (14) est montée sur le corps d'arbre (11), dans lequel il est prévu un corps de réception (15), qui peut contenir au moins en partie l'arbre à cames (10) en vue de l'exécution d'un usinage par meulage, **caractérisé en ce que** la roue dentée (14) présente un moyen de réception (16), sur lequel le corps de réception (15) peut être appliqué et par lequel la réception de l'arbre à cames (10) par le corps de réception (15) est rendue possible.

2. Dispositif de réception (1) selon la revendication 1, **caractérisé en ce que** le moyen de réception (16) est formé par un rebord (17) avec une configuration de forme conique, dans lequel le rebord (17) est formé du côté du moyeu et de façon concentrique autour de l'axe de rotation (13) sur la roue dentée (14).

3. Dispositif de réception (1) selon la revendication 2, **caractérisé en ce que** le corps de réception (15) présente une configuration de réception (18) de forme complémentaire à la configuration de forme conique du rebord (17), et qui peut être appliquée sur la configuration de forme conique du rebord (17).

4. Dispositif de réception (1) selon l'une quelconque des revendications 1 à 3, **caractérisé en ce que** le corps d'arbre (11) fait saillie dans son extension longitudinale dans la direction de son axe de rotation (13) axialement au-delà de la position de la roue dentée (14) sur le corps d'arbre (11), de telle manière que la roue dentée (14) soit placée sur celui-ci à distance de l'extrémité axiale du corps d'arbre (11).

5. Dispositif de réception (1) selon l'une quelconque des revendications précédentes, **caractérisé en ce que** le corps de réception (15) est formé au moins localement avec une cavité ouverte en extrémité (19), dans laquelle le bout d'arbre (25) du corps d'arbre (11) peut être monté.

6. Dispositif de réception (1) selon l'une quelconque des revendications précédentes, **caractérisé en ce qu'**au moins un élément fonctionnel (12) est réalisé en forme d'élément de palier (20).

7. Dispositif de réception (1) selon l'une quelconque des revendications précédentes, **caractérisé en ce que** l'arbre à cames (10) est un arbre à cames composé (10), dans lequel le corps d'arbre (11), la roue dentée (14) et de préférence aussi les éléments fonctionnels (12) sont réalisés en forme de pièces détachées et sont assemblés sur le corps d'arbre (11).

8. Procédé d'usinage par meulage d'un arbre à cames (10) dans un dispositif de réception (1) destiné à recevoir l'arbre à cames (10), dans lequel l'arbre à cames (10) comprend un corps d'arbre (11) avec des éléments fonctionnels (12), qui s'étend selon un axe de rotation (13) et dans lequel une roue dentée (14) est montée sur le corps d'arbre (11), dans lequel le procédé comprend au moins les étapes suivantes:
- préparer un corps de réception (15) pour la réception au moins partielle de l'arbre à cames (10),
- préparer la roue dentée (14) avec un moyen de réception (16),
- recevoir l'arbre à cames (10) par une application du corps de réception (15) sur le moyen de réception (16), et
- meuler ledit au moins un élément fonctionnel (12).

9. Procédé selon la revendication 8, **caractérisé en ce que** l'on prépare la roue dentée (14) avec une denture (21), dans lequel le moyen de réception (16) et la denture (21) sont produits avec un centre d'usinage géométrique commun, et/ou **en ce que** la roue dentée (14) est ensuite posée à la presse ou frettée sur le corps d'arbre (11).

10. Arbre à cames (10) avec un corps d'arbre (11) comprenant plusieurs éléments fonctionnels (12), dans lequel le corps d'arbre (11) s'étend selon un axe de rotation (13) et dans lequel une roue dentée (14) est montée sur le corps d'arbre (11), **caractérisé en ce que** la roue dentée (14) présente un moyen de réception (16), sur lequel un corps de réception (15) peut être appliqué et par lequel la réception de l'arbre à cames (10) par le corps de réception (15) est rendue possible, afin de procurer un dispositif de réception (1) pour l'usinage par meulage d'au moins un des éléments fonctionnels (12), dans lequel le moyen de réception (16) est formé par un rebord (17) formé du côté du moyeu et de façon concentrique autour de l'axe de rotation (13) sur la roue dentée (14) avec une configuration de forme conique ou une forme conique.

11. Arbre à cames (10) selon la revendication 10, **caractérisé en ce que** le corps d'arbre (11) fait saillie dans son extension longitudinale dans la direction de l'axe de rotation (13) axialement au-delà de la position de la roue dentée (14) sur le corps d'arbre (11), de telle manière que la roue dentée (14) soit montée sur celui-ci à distance du bout d'arbre axial (25) du corps d'arbre (11).

12. Arbre à cames (10) selon une des revendications 10 ou 11, **caractérisé en ce que** l'arbre à cames (10) est un arbre à cames composé (10), dans lequel le corps d'arbre (11), la roue dentée (14) et de préférence aussi les éléments fonctionnels (12) sont réalisés en forme de pièces détachées et sont assemblés les uns aux autres.
